# EUROPEAN PATENT SPECIFICATION

(11) **EP 3 071 611 B1**
(45) Date of publication and mention of the grant of the patent: **31.03.2021**
(21) Application number: 14809227.3
(22) Date of filing: 20.11.2014
(51) Int. Cl.: C08F 220/10, C08F 222/10, C09J 4/06, C09J 163/00

(54) **ADHESIVE, ADHESIVE-BACKED MEMBER, AND METHOD FOR CONNECTING BETWEEN MEMBERS**
HAFTSTOFF, ELEMENT MIT HAFTRÜCKSEITE UND VERFAHREN ZUR VERBINDUNG ZWISCHEN ELEMENTEN
ADHÉSIF, ÉLÉMENT À DOS ADHÉSIF, ET PROCÉDÉ DE LIAISON D'ÉLÉMENTS

(30) Priority: 21.11.2013 JP 2013241148
(43) Date of publication of application: 28.09.2016
(73) Proprietor: 3M Innovative Properties Company, St. Paul, MN 55133-3427 (US)
(72) Inventor: TASAKA, Yoshihiko, Tokyo 141-8684 (JP)
(74) Representative: Mathys & Squire
(86) International application number: PCT/US2014/066556
(87) International publication number: WO 2015/077419

(56) References cited:
- EP-A1- 2 529 856
- WO-A1-97/12009
- GB-A- 2 500 029
- US-A1- 2011 120 646

## Description

### Field of Technology

The present invention relates to a method for connecting between members, and to an adhesive and adhesive-backed member used with this method.

### Background Art

Use of adhesive containing a thermosetting resin, such as an epoxy resin, is well known for joining members that cannot be joined by mechanical fastening or welding. When providing an adhesive layer in advance to member surfaces to be joined, use of a film or sheet type adhesive is common, when considering handling, storage stability, impact on the work environment, and the like (see Japanese Unexamined Patent Application Publication No. H08-165459A and Japanese Unexamined Patent Application Publication No. H09-095600A).

Further, in Japanese Unexamined Patent Application Publication No. 2007-106963A, the joining of members having roughness and the like is attempted using a sheet-like adhesive of blended thermally expanding capsules.

Application WO9712009 dislcoses a thermosetting film adhesive obtained by irradiating a precursor composition and converting it into a film shape, the precursor composition including: a) an epoxy resin not having a radiation-polymerizable functional group; b) a curing agent for curing the epoxy resin; c) a first radiation-polymerizable compound capable of reacting with one, or both, of the epoxy resin and the curing agent at the time of heat-curing; d) a second radiation-polymerizable compound not chemically reacting with the epoxy resin and the curing agent; and e) solid rubber particles; wherein the components b) and e) are dispersed in a matrix phase comprising the components a), c) and d), and which is liquid at a normal temperature.

Application EP2529856 discloses a method of making a metal part assembly, the method comprising: - providing a first metal part and a second metal part wherein at least one of the first and second metal part comprises a metal panel; - providing an adhesive sheet having a first portion near a first end of the adhesive sheet and a second portion near a second end opposite to the first end of the adhesive sheet, the adhesive sheet comprising a thermosettable composition that comprises a mixture of a first and second epoxy compound and an epoxy curing agent, wherein the first epoxy compound has a weight average molecular weight of at least 1000 g/mol and has an amount of epoxy groups of between 5 and 10 mole% and the second epoxy compound has a weight average molecular weight of not more than 400 g/mol and wherein the weight ratio of first to second epoxy compound is between 0.8 and 4; - adhering said first and second metal part together such that the adhesive sheet is provided between said first and second metal part thereby forming a metal joint; and heating the metal joint so as to cause thermosetting of the thermosettable composition of the adhesive sheet.

Application GB2500029A discloses a two-stage dual UV/heat cure composition that may cure at temperatures lower than 120 A°C, The two-stage curable composition comprises: (a) an epoxy component; (b) a latent epoxy hardener component; (c) a cyanate ester; (d) a UV curable component; and (e) a UV initiator component.

Application US2011120646 discloses a two-part structural adhesive composition comprising a curable epoxy resin, an amine curing agent, a toughening agent, and a reactive liquid modifier.

### Summary of the Invention

It has been found, however, that film or sheet type adhesives require a processing step to tailor the adhesive to the shape of the portions to be bonded and a step for transferring this to an adherent surface using pressure (and in some cases heating at the same time), but there are restrictions to the shape, and loss of material during processing may occur.

On the other hand, an adhesive for which a thickness of the joint can be adjusted by tailoring it to gaps between members, and that can ensure a sufficient adhesive force is desirable.

Therefore, an object of the present invention is to provide a joining method between members using an adhesive-backed member that can demonstrate excellent adhesive properties between members and that can be used to fill a gap between members.

In one aspect of the present invention, a method is provided for joining between members. The method comprises: the step of forming an adhesive layer by applying onto a first member surface a liquid composition containing a thermosetting resin not having a radiation-polymerizable functional group, a hardener, a first polymerizable compound having a radiation-polymerizable functional group and a heat-curable functional group, a second polymerizable compound having a radiation-polymerizable functional group and not having a heat-curable functional group, and a thermally expanding capsule; the step of semi-solidifying the adhesive layer by irradiating radiation onto the adhesive layer such that a semi-solidified adhesive layer is formed that, for the most part, has no tackiness on its surface and no fluidity or deformation, even when externally touched; the step of disposing a second member above the semi-solidified adhesive layer so as to oppose the first member surface; and the step of joining the first member and the second member by heating to expand and solidify the semi-solidified adhesive layer wherein a shear storage modulus of the semi-solidified adhesive layer is not lessthan 100 and kPa at 25°C and 1 Hz, as disclosed in the examples section.

In another aspect of the present invention, an adhesive is provided that is used to fill a gap. The adhesive is obtained or obtainable by radiation curing of a composition comprising: a liquid composition containing a thermosetting resin not having a radiation-polymerizable functional group; a hardener; a first polymerizable compound having a radiation-polymerizable functional group and a heat-curable functional group; a second polymerizable compound having a radiation-polymerizable functional group and not having a heat-curable functional group; and a thermally expanding capsule wherein the adhesive is in the form of a semi-solidified adhesive layer such that, for the most part, the adhesive layer has no tackiness on its surface and no fluidity or deformation, even when externally touched.

In an additional aspect of the present invention, an adhesive-backed member is provided that includes a layer formed from the above adhesive.

According to the present invention, a joining method between members can be provided that uses an adhesive-backed member that can demonstrate excellent adhesive properties between members and/or that can be used to fill a gap between members.

With the joining method between members, an adhesive layer can be formed in advance on a member surface, and an adhesive-backed member that can demonstrate excellent adhesive properties can be mass supplied. Furthermore, including a thermally expanding capsule in the adhesive layer can allow gaps between two members that exist prior to heating to be bonded with high reliability due to expansion of the adhesive layer during heating.

### Brief Description Of The Drawings

FIG. 1 is a cross-sectional view schematically illustrating a joining method between members according to the present embodiment.
FIG. 2 is a perspective view schematically illustrating one embodiment of an adhesive-backed member according to the present embodiment.
FIG. 3 is a perspective view schematically illustrating one embodiment of an adhesive-backed member according to the present embodiment.
FIG. 4 is a perspective view schematically illustrating one embodiment of an adhesive-backed member according to the present embodiment.
FIG. 5 is a perspective view schematically illustrating one embodiment of an adhesive-backed member according to the present embodiment.

### Exemplary Embodiments of the Invention

Embodiments of the present invention are described in detail below while referring to the drawings, but the present invention is not limited to the embodiments below.In the description below, same reference numerals are assigned to same or similar portions, and redundant descriptions are omitted.

The joining method between members of the present embodiment includes: a step of forming an adhesive layer by applying a liquid composition to a first member surface, a step of irradiating the adhesive layer with radiation to semi-solidify the adhesive layer, a step of disposing a second member above the semi-solidified adhesive layer to oppose the first member surface, and a step of joining the first member and the second member by heating to expand and solidify the semi-solidified adhesive layer. Here, "above the adhesive layer" means a side of the adhesive layer not in contact with the first member.

### (Liquid Composition)

The liquid composition according to the present embodiment contains: (a) a thermosetting resin not having a radiation-polymerizable functional group, (b) a hardener, (c) a first polymerizable compound having a radiation-polymerizable functional group and a heat-curable functional group, (d) a second polymerizable compound having a radiation-polymerizable functional group and not having a heat-curable functional group, and (e) a thermally expanding capsule.

### (a) Component: Thermosetting Resin

The (a) component is not particularly limited and may be any thermosetting resin not having a radiation-polymerizable functional group, and examples thereof include epoxy resins and cyanate ester resins.

The form of epoxy resin may be, at room temperature, a solid, a semi-solid, or a liquid, and the epoxy resin may be used in combination with a different type of epoxy resin. Examples of the epoxy resin include bisphenol type epoxy resins, such as bisphenol A type epoxy resin, bisphenol F type epoxy resin, and the like, hydrogenated epoxy resins obtained by hydrogenating an aromatic ring of a bisphenol type epoxy resin, aliphatic epoxy resins, halogenated epoxy resins, and novolac type epoxy resins. An epoxy resin that has a multi-functional epoxy resin other than a novolac type epoxy resin or a polycyclic aromatic group in a side chain may be used to increase heat resistance. Examples of a multi-functional epoxy resin include p-aminogenol triglycidyl ether and other glycidyl amine type epoxy resins, trihydroxy phenylmethane triglycidyl ether, and glyoxal phenol novolac tetraglycidyl ether; and examples of an epoxy resin containing a polycyclic aromatic group in a side chain include fluorene epoxy resins.A single type of epoxy resins may be used independently or two or more types may be blended for use.

As the cyanate ester resin, dicyanate ester compounds are preferred, and examples include bis (4-phenyl cyanate) methane, bis (3-methane-4-phenyl cyanate) methane, bis (3-ethyl-4-phenyl cyanate) methane, bis (3'5-dimethyl-4-phenyl cyanate) methane, 1'1-bis (4-phenyl cyanate) ethane, and 2'2-bis (4-phenyl cyanate) propane, and prepolymers derived from these.

A content amount of the (a) component is preferably between 10 and 90 mass% as a standard of the total mass of the liquid composition, and is more preferably between 25 and 85 mass%, when considering the balance between viscosity at the time of application of the liquid composition and surface tackiness of the semi-solidified adhesive layer.

### (b) Component: Hardener

The (b) component may be selected according to the type of thermosetting resin used as the (a) component.

For the (b) component, when an epoxy resin is used as the (a) component, the hardener is not particularly limited as long as the epoxy resin can be hardened by heat, but a latent hardener that is inert near room temperature and activated by heat may be used. Examples of latent hardeners include dicyandiamide and derivatives thereof, hydrazide compounds, boron trifluoride-amine complexes, and reaction products (urea derivatives) of amine compounds and isocyanate compounds or urea compounds. A hardening accelerator may also be used in combination with the hardener of the epoxy resin as the (b) component. Examples of hardening accelerators include imidazole compounds, reaction products (amine-epoxy adducts) of amine compounds and an epoxy compounds, urea derivatives, and the like.

From the perspective of enhancing heat resistance, it is preferable that a combination of an epoxy resin and a hardener is selected so that the glass transition temperature (Tg) of the epoxy compound is 100°C or above, and it is more preferable to select so as to be 150°C or above.

Organic metal salts, organic metal salt compounds, or other hardening catalysts may be given as examples of the (b) component when a cyanate esther resin is used as the (a) component. Iron, copper, zinc, cobalt, manganese, nickel, tin, and the like may be given as examples of metals that compose an organic metal salt or an organic metal complex.Examples of organic metal salts include iron naphthenate, copper naphthenate, zinc naphthenate, cobalt naphthenate, nickel naphthenate, manganese naphthenate, and the like. Examples of organic metal complexes include copper acetylacetonate, and the like.

When an epoxy resin is used as the (a) component and when considering the curing rate and storage stability at room temperature, the content amount of the (b) component is preferably 0.1 to 80 parts by mass relative to 100 parts by mass of the (a) component, and is more preferably 1 to 50 parts by mass.When a cyanate ester resin is used as the (a) component, the content is preferably 0. 001 to 10 parts by mass relative to 100 parts by mass of the (a) component and is more preferably 0.01 to 1 parts by mass.

### (c) Component: First Polymerizable Compound

The (c) component is not particularly limited as long as it is a polymerizable compound having at least one or more each of the radiation-polymerizable functional group and the heat-curable functional group. Including the (c) component enhances compatibility with either the (a) component or the (b) component and increases the adhesive force of the formed adhesive layer.

The radiation-polymerizable functional group is a group having a polymerizable unsaturated bond that reacts when irradiated with ultraviolet light, an electron beam, visible light, or other radiation, and examples thereof include an acroyl group, a methacroyl group, a vinyl group, and the like.

The heat-curable functional group is a group that can react with the (a) component or the (b) component, and examples thereof include a carboxyl group, a glycidyl group, a hydroxyl group, an amino group, and the like.

Examples of compounds having a carboxyl group and an acroyl group or a methacroyl group include acrylic acid, methacrylic acid, acryloyloxyethyl phthalate, methacryloyloxyethyl phthalate, acryloyloxyethyl succinate, methacryloyloxy ethyl succinate, ω- carboxy - polycaprolactone monoacrylate, phthalic acid mono hydroxyethyl acrylate, acrylic acid dimer, and the like.

Examples of compounds having a glycidyl group and an acroyl group or a methacroyl group include glycidyl acrylate, glycidyl methacrylate, N- [4- (2,3-epoxypropoxy) -3,5-dimethyl benzyl] acrylamide, and the like.

Examples of compounds having a hydroxyl group and an acroyl group or a methacroyl group include 2-hydroxyethyl acrylate, 2-hydroxyethyl methacrylate, 2-hydroxypropyl acrylate, 2-hydroxypropyl methacrylate, and the like.

### (d) Component: Second Polymerizable Compound

The (d) component is not particularly limited as long as it is a polymerizable compound having at least one radiation-polymerizable functional group and not having a heat-curable functional group. A single type of the (d) component may be used independently or two or more types may be blended for use.

Examples of the (d) component are a mono-ethylenically unsaturated monomer (hereinafter referred to as a "low Tg monomer") where the glass transition temperature of the homopolymer is less than 0°C, and a mono-ethylenically unsaturated monomer (hereinafter referred to as a "high Tg monomer") where the glass transition temperature of the homopolymer exceeds 0°C.

For the low Tg monomers, esters of non-tertiary alkyl alcohols having an alkyl group with 2 to 20 carbon atoms, with acrylic acid or methacrylic acid are preferred, and esters of non-tertiary alkyl alcohols having an alkyl group with 4 to 12 carbon atoms, with acrylic acid or methacrylic acid are more preferred. Examples of this type of low Tg monomer include n-butyl acrylate, hexyl acrylate, 2-ethylhexyl acrylate, octyl acrylate, isooctyl acrylate, dodecyl acrylate, lauryl acrylate, octadecyl acrylate, or mixtures thereof.

Examples of high Tg monomers include isobornyl acrylate, isobomyl methacrylate, cyclohexyl methacrylate, dicyclopentanyl acrylate, dicyclopentenyl methacrylate, acryloyl morpholine, N-vinyl pyrrolidone, N-vinyl caprolactam, N-vinyl piperidine, N, N-dimethylacrylamide, acrylonitrile, and the like.

The (d) component can form a copolymer with the (c) component when the adhesive layer formed from the liquid composition is irradiated with irradiation. By this, the adhesive layer is solidified. From a perspective of enhancing heat resistance, it is preferable that a polymerizable compound is selected as the (d) component so that the Tg of a cured product of the copolymer composed of the (c) component and the (d) component is 100°C or more.The Tg of the copolymer can be calculated according to the Fox equation (TG Fox, Bull. Am. Phys. Soc., 1, 123 (1956)).

A content ratio of the (c) component and the (d) component in the liquid composition is preferably 90: 10 to 1:99 by mass ratio ((c) component: (d) component), and is more preferably 60:40 to 2:98.

The above range is for more easily expressing a balance in compatibility with the (a) component, fluidity during heat expansion, and adhesiveness after solidification (hardening).

### (e) Component: thermally expanding capsule

Thermally expanding microcapsules for which a low boiling point compound, which is an expansion agent, is wrapped by a thermoplastic resin can be used as the (e) component.The thermally expanding microcapsules expand because the thermoplastic resin that makes up the shell softens when heated and the expansion agent wrapped therein gasifies, thereby increasing the vapor pressure, which expands the shell.

Copolymers synthesized from vinylidene chloride, acrylonitrile, styrene, acrylic acid esters, methacrylic acid esters and the like may be used as the thermoplastic resin. A low boiling point hydrocarbon may be favorably used as the low boiling point compound, and examples include isopentane, n-pentane, isobutane, and the like.

Commercially available products such as Expancel (registered trademark) made by Japan Fillite Co., Ltd., Matsumoto Microsphere (registered trademark) made by Matsumoto Yushi-Seiyaku Co., Ltd., Microsphere made by Kureha, Inc., and the like, may be used as the thermally expanding capsule.

The content amount of the (e) component in the liquid composition is preferably 0.1 to 50 mass% and more preferably 0.3 to 30 mass%. When the content amount of the (e) component is 0.1 mass% or greater, sufficient expansion is easily obtained, and when it is 50 mass% or below, adhesive strength after hardening is easily ensured. When considering ensuring strong adhesive strength after hardening, it is preferable that the (e) component is blended so that the expansion rate in the thickness direction while heating is five times or less, and it is more preferable to blend so that the expansion rate thereof is three times or less.

The liquid composition according to the present embodiment may also contain other components such as photopolymerization initiators, thermal polymerization initiators, crosslinking agents, chain transfer agents, antioxidants, organic or inorganic fillers, a silane coupling agent, and the like as necessary in addition to the above components.

### (f) Component: Photopolymerization Initiator

The liquid composition according to the present embodiment may further contain a photopolymerization initiator from a perspective of promoting a reaction between the (c) component and the (d) component through irradiation with radiation.

There are two types of photopolymerization initiators, a cleavage type and a hydrogen abstraction type. Examples of cleavage type photopolymerization initiators include benzo ethyl ether, diethoxyacetophenone, 2,2-dimethoxy-1,2-diphenyl ethane-1-one, 2-hydroxy-2-methyl-1-phenyl-propan-1-one, 1-hydroxy cyclohexyl phenyl ketone, 2-hydroxy-1--2-methyl-propan-1-one, 2-methyl-1- [4- (methylthio) phenyl] -2-morpholinopropan-1-one, 2-benzyl-2-dimethylamino-1- (4-morpholinophenyl) - butanone-1,2-dimethylamino-2- (4-methylbenzyl) 1-(4-morpholin-4-yl-phenyl) - butan-1-one, bis (2,4,6-trimethyl benzoyl) - phenyl phosphine oxide, 2,4,6-trimethyl benzoyl - diphenyl - phosphine oxide, and the like.Examples of hydrogen abstraction type photopolymerization initiators include benzophenone, 2,4-diethylthioxanthone, and the like.

The liquid composition according to the present embodiment may further contain a thermal polymerization initiator from a perspective of promoting hardening through heating the semi-solidified adhesive layer. Examples of thermal polymerization initiators include azo compounds such as azobisisobutyronitrile and the like, and organic peroxides such as benzoyl peroxide and the like.

Any compound that has reactivity with the (c) component and the (d) component and does not inhibit hardening of the (a) component may be used as a crosslinking agent. Examples of crosslinking agents include divinyl ether, polyfunctional acrylates, polyfunctional methacrylates, polyfunctional isocyanate compounds, block type polyfunctional isocyanate compounds, and the like. Examples of polyfunctional acrylates include 1,6- hexane diol diacrylate, trimethylol propane triacrylate, pentaerythritol tetraacrylate, 1,2-ethylene glycol diacrylate, and the like.

Examples of chain transfer agents include carbon tetrabromide, mercapto compounds, and the like. Examples of mercapto compounds include ethanethiol, butanethiol, dodecanethiol, mercaptoethanol (thioglycol), 3-mercapto-propanol, thioglycerin (mercapto glycerin), thioglycolic acid (mercaptoacetic acid), 2-mercaptopropionic acid (thiolactic acid), 3-mercaptopropionic acid, α-mercapto isobutyric acid, mercaptopropionic acid methyl, mercaptopropionic acid ethyl, and the like.

Organic or inorganic fillers may be added to the liquid composition according to an objective such as increasing the amount, reducing the weight, imparting a flame retardant property, imparting thermal conductivity, modifying, flow control, coloring, and the like. Examples of organic or inorganic fillers include calcium carbonate, mica, talc, hollow glass beads, aluminum hydroxide, magnesium hydroxide, silica, a core-shell rubber, fumed silica, organic pigments, inorganic pigments, and the like.

Examples of silane coupling agents include alkoxysilanes having a function group such as an amino group, an epoxy group, and a mercapto group, and the like.

Further, a polymer component such as phenoxy resin and polyvinyl butyral resins, and an organopolysiloxane such as dimethylsiloxane, diphenyl siloxane, and the like may be further blended in the liquid composition.

Viscosity may be adjusted by adding a solvent to the liquid composition, but a solvent-free system is preferred for the liquid composition because it does not require a drying step to remove the solvent, and film thickness of the adhesive layer can be adjusted without consideration of film reduction after application. With a solvent-free liquid composition, a thick film coating of 200 µm or greater is possible.

A method for preparing the liquid composition according to the present embodiment is not particularly limited, but, for example, preparation may be performed according to the following.

First, components (a), (b), and (c) are blended in a stirring device to prepare a uniform pre-mixture. Next, the (b) compound and the (e) compound are added to the pre-mixture, and these are uniformly dispersed to obtain the target liquid composition. Further, when the (f) composition is blended as well, it may be added to the pre-mixture. Addition of the compounds (b), (e), and (f) to the pre-mixture may be performed at or near room temperature.

The viscosity of the liquid composition near room temperature (for example 25°C) is preferably 0.001 to 1000 Pa•s, and is more preferably 1 to 1000 Pa•s.

The liquid composition according to the present embodiment may be used as an adhesive.The adhesive that includes the liquid composition may be applied as is to an adherend.

The adhesive according to th present embodiment is characterized in that it may be used to fill a gap, and includes: a liquid composition containing a thermosetting resin not having a radiation-polymerizable functional group, a hardener, a first polymerizable compound having a radiation-polymerizable functional group and a heat-curable functional group, a second polymerizable compound having a radiation-polymerizable functional group and not having a heat-curable functional group, and a thermally expanding capsule.From a perspective of enhancing heat resistance, the thermosetting resin may be an epoxy resin or a cyanate ether resin.

Because the adhesive according to the present embodiment can be applied directly to the adherend without going through a step for forming a film, and because the process is simplified and the adhesive is a liquid at room temperature, adjusting the thickness to match a gap is easy. Further, the adhesive according to the present embodiment may be applied between members disposed so as to have a predetermined gap.

The adhesive-backed member according to the present embodiment is characterized by being provided with a layer formed from the above adhesive. The adhesive-backed member has a semi-solidified adhesive layer, wherein the adhesive is applied to a first member which is the adherend to form an adhesive layer, and subsequently, the adhesive layer is irradiated with radiation. This type of adhesive-backed member can be joined with a second member by expanding and solidifying by heating the semi-solidified adhesive layer.

### (Joining Method Between Members)

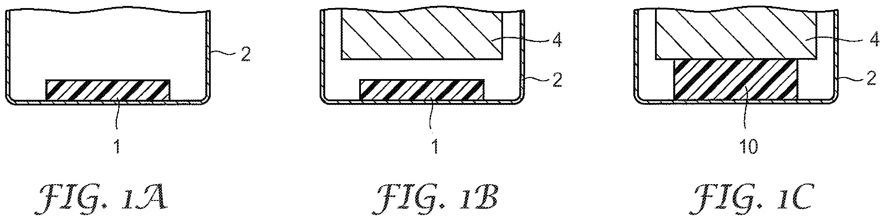

FIG. 1 is a cross-sectional view schematically illustrating a joining method between members according to the present embodiment.

### (First Step)

First, as illustrated in (a) of FIG. 1, the liquid composition is applied to the first member 2 which is an adherend, and after the adhesive layer 1 is formed, the adhesive layer 1 is irradiated with radiation to prepare a semi-solidified adhesive-backed member.

The first member 2 is not particularly limited, and various metals, heat resistant resins (such as polyphenylene sulfide), a permanent magnet, and the like may be used. The first member 2 may have a planar shape or it may have various shapes such as an incline, a step, surface roughness, or the like. The liquid composition according to the present embodiment may be applied in a thin line even for members having a three-dimensional shape.

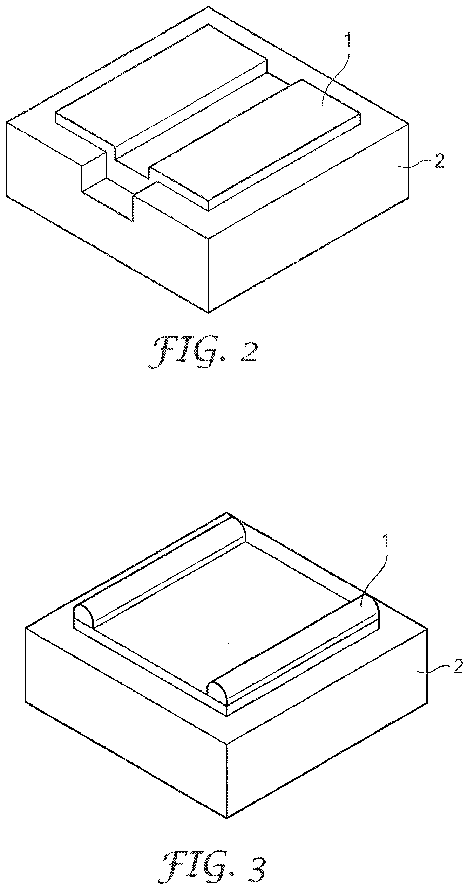

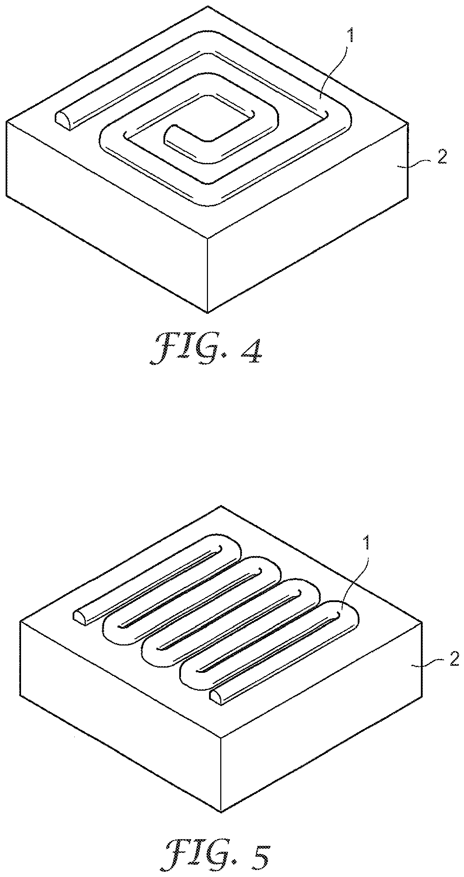

FIGS. 2 to 5 are perspective views schematically illustrating one embodiment of an adhesive-backed member according to the present embodiment.For example, as illustrated in FIG. 2, the adhesive layer 1, for which the thickness has been changed to match a difference in levels with the first member 2, which has a concave portion, can be formed. Further, as illustrated in FIG. 3, the adhesive layer 1 having a stepped shape due to overcoating can be formed on the flat first member 2. Furthermore, as illustrated in FIG. 4, the adhesive layer 1 having a complex two-dimensional shape can be formed on the flat first member 2.

A manual or automatic dispenser that is used in a liquid gasket application or the like may be used for application onto the first member 2. The dispenser may be a contact type or a non-contact type. Use of the dispenser enables detailed application such as a line application, a dot application, or the like. When a dispenser is used, as illustrated in FIG. 5, the adhesive layer 1 can be formed on the first member 2.

When ultraviolet light is used as the radiation beam, a high-pressure mercury vapor lamp, metal halide, LED, or the like may be used as the light source, and the irradiation intensity may be approximately 300 mW cm², and the ultraviolet light may be irradiated in a low oxygen atmosphere.

Here, "semi-solidification" means there is, for the most part, no tackiness on the surface, and that there is no fluidity or deformation in the semi-solidified adhesive layer 1 even when externally touched.

A shear storage modulus of the semi-solidified adhesive layer is 100 kPa or more at 25°C and 1 Hz, more preferably 200 kPa or more, and most preferably 300 kPa or more. A shear storage modulus of the semi-solidified adhesive layer of 100 kPa or more suppresses adhesion of foreign debris such as dust onto the adhesive layer surface and facilitates a reduction in frictional force when disposing on the second member. An upper limit of the shear storage modulus of the semi-solidified adhesive layer 1 is not particularly limited, but may be approximately 10,000 kPa.

### (Second Step)

Next, as illustrated in (b) of FIG. 1, the second member 4, which is a separate adherend, is disposed above the semi-solidified adhesive layer 1, and afterwards, the semi-solidified adhesive layer 1 is heated.

The material of the second member 4 is not particularly limited and may be identical to that of the first member, or it may be a different material.

### (Third Step)

After heating, as illustrated in (c) of FIG. 1, the semi-solidified adhesive layer 1 expands from the heat to form a solidified joining layer 10, and the first member 2 and the second member 4 are joined by the filling the gap between the first member 2 and the second member 4. When considering ensuring strong adhesive strength after hardening, it is preferable that the expansion rate in the thickness direction after heating the semi-solidified adhesive layer 1 be five times or less, and more preferable that it be three times or less.

The heating temperature is normally between 100 and 180°C and is preferably between 130 and 170°C.

Furthermore, according to the shape of the adherend, the step of semi-solidifying the adhesive layer by applying the liquid composition again onto the adhesive layer solidified in the second step above and irradiating it with radiation, may be repeated. In the event that the gap between the adherends is wide, providing the adherends with a difference in surface levels is effective.The joining layer 10 may function not only to secure between the members but may also function as a sealing layer or shock absorbing layer.

As described above, the joining method between members according to the present embodiment can be applied to joining by filling a gap between various adherends, and is also favorable for joining different materials such as a metal and plastic, metal and ceramics, and the like.

The joining method between members according to the present embodiment can be applied to affix metal, glass, ceramic, heat-resistant resin machined parts, and the like used in transportation equipment, industrial equipment, electrical and electronic equipment, construction members, and the like. More specifically, the joining method thereof can be applied to secure automotive body related parts, to affix magnets, insulating members, coils, and the like in motors in automotive and industrial equipment, to affix members for bicycles, furniture, and construction applications, to affix electronic components, to secure sporting equipment components, and for securing in conjunction with a shock absorbing function in automobiles and electronic equipment.

### Examples

A detailed description of the present invention is given below using examples, but the present invention is not limited thereby.

### (Examples 1 through 5 and Comparative Example 1)

The blending amounts (parts by mass) shown in Table 1 for each component were blended respectively to prepare a liquid composition. Note that, the components shown in Table 1 are as follows.

### (a) Component: Thermosetting Resin

YDPN-638 (Phenol novolac type epoxy resin, made by Nippon Steel & Sumikin Chemical Co., Ltd.)
TACTIX742 (Epoxy resin, made by Huntsman)
BT-2160RX (cyanate ester resin, made by Mitsubishi Gas Chemical Co., Ltd.)

### (b) Component: Hardener

CG1200G (dicyandiamide, made by Air Products)
2P4MHZ-PW (imidazole derivative, made by Shikoku Chemicals Co., Ltd.)
2MA-OK-PW (imidazole derivative, made by Shikoku Chemicals Co., Ltd.)
Zinc naphthenate (made by Wako Pure Chemical Industries, Ltd.)

### (c) Component: First Polymerizable Compound

GMA (Glycidyl methacrylate, made by Mitsubishi Rayon Co., Ltd.)

### (d) Component: Second Polymerizable Compound

FA5I3M (dicyclopentanyl methacrylate, made by Hitachi Chemical Co., Ltd.)

### (e) Component: thermally expanding capsule

FN100SS (made by Matsumoto Yushi-Seiyaku Co., Ltd.)
FN100M (made by Matsumoto Yushi-Seiyaku Co., Ltd.)

### (f) Component: Photopolymerization Initiator

Irgacure 819 (made by BASF)
Irgacure 184 (made by BASF)

### (g) Component: Core-shell Polymer Particles

AC3355 (made by Aikae Industry Co., Ltd.)

### (h) Component: Calcium Carbonate Powder

Whiton SB red (made by Shiraishi Calcium Co., Ltd.)

### (i) Component: Antioxidant

Irganox 1010 (made by BASF)

### (j) Component: Fine Silica

RX200 (made by Nippon Aerosil Co., Ltd.)
TS720 (made by Cabot Co., Ltd.)

**[Table 1]**

| | | EXAMPLE 1 | EXAMPLE 2 | EXAMPLE 3 | EXAMPLE 4 | EXAMPLE 5 | COMPARATIVE EXAMPLE 1 |
|---|---|---|---|---|---|---|---|
| (a) | YDPN-638 | 60 | 60 | 60 | 60 | - | 60 |
| | TACTIX742 | 30 | 30 | 30 | 30 | - | 30 |
| | BT-2160RX | - | - | - | - | 90 | - |
| (b) | CG1200G | 10 | 10 | 10 | 10 | - | 10 |
| | 2P4MHZ-PW | 2 | - | - | - | - | - |
| | 2MA-OK-PW | - | 4 | 4 | 4 | - | 2 |
| | zinc napthenate | - | - | - | - | 0.21 | - |
| (C) | GMA | 15 | 15 | 15 | 15 | 15 | 15 |
| (d) | FA513M | 15 | 15 | 15 | 15 | 15 | 15 |
| (e) | FN100SS | - | 40 | 26.7 | 8.9 | 40 | - |
| | FN100M | 40 | - | - | - | - | - |
| (f) | Irgacure819 | 0.09 | 0.09 | 0.225 | 0.225 | 0.09 | 0.9 |
| | Irgacure184 | 0.09 | 0.09 | 0.075 | 0.075 | 0.09 | - |
| (g) | AC3355 | 15 | 15 | 15 | 15 | - | - |
| (h) | Whiton SB red | - | - | - | - | - | 90 |
| (i) | Irganox1010 | 0.135 | 0.135 | 0.135 | 0.135 | - | 0.135 |
| (j) | RX200 | - | - | - | 4.75 | - | - |
| | TS720 | - | - | - | - | 4.75 | - |

The prepared liquid composition was applied at a thickness of 0.2 mm to a 10 mm end portion of a PPS resin board (made by Tosoh Co., Ltd) measuring 25x50x2 mm (thickness) and was irradiated for 15 seconds by a high-pressure mercury vapor lamp (Spotcure SP-II, UVA_600 mW/cm² made by Ushio, Inc.) to form a semi-solidified adhesive layer.

### (Tackiness of the Semi-Solidified Adhesive Layer)

The tackiness of the semi-solidified adhesive layer was measured using the following procedure.

First, a semi-solidified adhesive layer was formed with a thickness of 0.5 mm under the above irradiation conditions, and four of these were stacked to prepare a test piece with a thickness of about 2 mm. Next, the test piece was held by a parallel plate with a diameter of 25 mm, and the shear storage modulus at a test temperature of 25°C and a test frequency of 1 Hz was measured using an RDA-II made by Rheometrics Corporation. For test material that exceeds the storage elastic modulus of 1000 kPa, a cylindrical test piece was prepared by rounding the test material to have a diameter of approximately 8 mm and a height of approximately 10 mm, and the test piece was held by a parallel plate having a diameter of 7.9 mm. Measurement was carried out under the same conditions. The results are given in Table 2.

### (Adhesive Properties After Hardening)

A test piece was prepared by disposing (pressure held by a clip) a cold rolled copper sheet measuring 25x100 mm with a thickness of 1.6 mm above a semi-solidified adhesive layer via a metal wire spacer so as to form an adhesive surface area with a width of 25 mm and a length of 10 mm. The test piece was heated from 25°C to 150°C at an average temperature increase rate of 16.7°C/min using an induction heating device (HotShot 2, manufactured by Aronicus), and next was placed in an oven at 150°C for 20 minutes to harden (solidify) the adhesive layer to prepare an evaluation test piece.The thickness of the spacer was changed in order to provide a gap between 1.5 times and 9 times the thickness of the semi-solidified adhesive layer. For example, the " 1.5 times" in Table 2 means that the thickness of the spacer is 1.5 times the thickness of the semi-solidified adhesive layer.

The shear bond strength of the evaluation test piece under tension was measured at an an ambient temperature and atmosphere and at a movement rate of 5 mm/minute, using a tensile tester (RTC1325A, manufactured by Orientec, Inc.).

In examples 1 to 5, the semi-solidified adhesive layers were temporarily fluidized under heat, but began to expand at the same time to fill the gap ensured by the metal wire spacer, and then hardened in that state.Meanwhile, in comparative example 1, because expansion did not occur, the gap was not filled, and when the clip was removed after heating, the PPS and copper plate easily separated. The results are given in table 2.In Table 2, "OK" designates when the gap was completely filled, and "NG" indicates when it was not filled.

**[Table 2]**

| | EXAMPLE 1 | EXAMPLE 2 | EXAMPLE 3 | EXAMPLE 4 | EXAMPLE 5 | COMPARATIVE EXAMPLE 1 |
|---|---|---|---|---|---|---|
| Storage elastic modulus (kPa) of the semi-solidified adhesive layer | 632 | 385 | 408 | 599 | 807 | 26800 |

| Adhesive property (adhesive strength: MPa) after hardening | | | | | | |
|---|---|---|---|---|---|---|
| 1.5 times | OK | OK | OK | OK(5.49) | OK(1.58) | NG |
| 3 times | OK | OK(2.38) | OK(3.11) | NG | NG | NG |
| 4 times | OK | NG | NG | NG | NG | NG |
| 5 times | OK(0.92) | NG | NG | NG | NG | NG |
| 9 times | OK(0.49) | NG | NG | NG | NG | NG |

## Claims

1. A method for joining between members, comprising:
step of forming an adhesive layer by applying onto a first member surface a liquid composition containing a thermosetting resin not having a radiation-polymerizable functional group, a hardener, a first polymerizable compound having a radiation-polymerizable functional group and a heat-curable functional group, a second polymerizable compound having a radiation-polymerizable functional group and not having a heat-curable functional group, and a thermally expanding capsule;
step of semi-solidifying the adhesive layer by irradiating radiation onto the adhesive layer such that a semi-solidified adhesive layer is formed that, for the most part, has no tackiness on its surface and no fluidity or deformation, even when externally touched;
step of disposing a second member above the semi-solidified adhesive layer so as to oppose the first member surface; and
step of joining the first member and the second member by heating to expand and solidify the semi-solidified adhesive layer
wherein a shear storage modulus of the semi-solidified adhesive layer is not less than 100 kPa at 25°C and 1 Hz, as disclosed in the description.

2. The method according to claim 1, wherein the thermosetting resin is an epoxy resin or a cyanate ester resin.

3. An adhesive used to fill a gap obtained or obtainable by radiation cure of a composition comprising:
a liquid composition containing a thermosetting resin not having a radiation-polymerizable functional group, a hardener, a first polymerizable compound having a radiation-polymerizable functional group and a heat-curable functional group,
a second polymerizable compound having a radiation-polymerizable functional group and not having a heat-curable functional group, and
a thermally expanding capsule
wherein the adhesive is in the form of a semi-solidified adhesive layer such that, for the most part, the adhesive layer has no tackiness on its surface and no fluidity or deformation, even when externally touched.

4. The adhesive according to claim 3, wherein the thermosetting resin is an epoxy resin or a cyanate ester resin.

5. An adhesive-backed member comprising a layer formed from an adhesive according to claim 3 or 4.

6. A combination of the adhesive-backed member according to claim 5 and a second member, wherein the adhesive-backed member is a first member, and the adhesive layer is between the first member and the second member but does not contact the second member.

7. The combination according to claim 6, wherein the adhesive layer is in the form of a heat cured joining layer that joins together the first member and the second member.

## Patentansprüche

1. Ein Verfahren zum Verbinden zwischen Elementen, umfassend:
Schritt des Bildens einer Kleberschicht durch Aufbringen einer flüssigen Zusammensetzung auf eine erste Elementoberfläche, die ein duroplastisches Harz, das keine strahlungspolymerisierbare funktionelle Gruppe aufweist, einen Härter, eine erste polymerisierbare Verbindung, die eine strahlungspolymerisierbare funktionelle Gruppe aufweist, und eine wärmehärtbare funktionelle Gruppe enthält, einer zweiten polymerisierbaren Verbindung, die eine strahlungspolymerisierbare funktionelle Gruppe aufweist und keine wärmehärtbare funktionelle Gruppe aufweist, und einer sich thermisch ausdehnenden Kapsel;
Schritt des Halbverfestigens der Kleberschicht durch Einstrahlen von Strahlung auf die Kleberschicht, sodass eine halbverfestigte Kleberschicht gebildet wird, die auf ihrer Oberfläche größtenteils keine Klebrigkeit und auch wenn von außen berührt keine Fluidität oder Verformung aufweist;
Schritt des Anordnens eines zweiten Elements über der halbverfestigten Kleberschicht, um der Oberfläche des ersten Elements gegenüber zu liegen; und
Schritt des Verbindens des ersten Elements und des zweiten Elements durch Erwärmen, um die halbverfestigte Kleberschicht auszudehnen und zu verfestigen,
wobei ein Scherspeichermodul der halbverfestigten Kleberschicht bei 25 °C und 1 Hz nicht weniger als 100 kPa beträgt, wie in der Beschreibung offenbart.

2. Das Verfahren nach Anspruch 1, wobei das duroplastische Harz ein Epoxyharz oder ein Cyanatesterharz ist.

3. Ein Kleber, der verwendet wird, um eine Lücke zu füllen, der durch Strahlungshärtung einer Zusammensetzung erhalten wird oder erhalten werden kann, umfassend:
eine flüssige Zusammensetzung, enthaltend ein duroplastisches Harz, das keine strahlungspolymerisierbare funktionelle Gruppe aufweist, einen Härter, eine erste polymerisierbare Verbindung, die eine strahlungspolymerisierbare funktionelle Gruppe und eine wärmehärtbare funktionelle Gruppe aufweist,
eine zweite polymerisierbare Verbindung, die eine strahlungspolymerisierbare funktionelle Gruppe aufweist und keine wärmehärtbare funktionelle Gruppe aufweist, und
eine sich thermisch ausdehnende Kapsel,
wobei der Kleber in Form einer halbverfestigten Kleberschicht vorliegt, sodass die Kleberschicht größtenteils keine Klebrigkeit an ihrer Oberfläche und auch wenn von außen berührt keine Fluidität oder Verformung aufweist.

4. Der Kleber nach Anspruch 3, wobei das duroplastische Harz ein Epoxyharz oder ein Cyanatesterharz ist.

5. Ein Element mit Kleberrückseite, umfassend eine aus einem Kleber nach Anspruch 3 oder 4 gebildete Schicht.

6. Eine Kombination des Elements mit Kleberrückseite nach Anspruch 5 und eines zweiten Elements, wobei das Element mit Kleberrückseite ein erstes Element ist und die Kleberschicht sich zwischen dem ersten Element und dem zweiten Element befindet, aber das zweite Element nicht berührt.

7. Die Kombination nach Anspruch 6, wobei die Kleberschicht in Form einer wärmegehärteten Verbindungsschicht vorliegt, die das erste Element und das zweite Element miteinander verbindet.

## Revendications

1. Procédé de jointure entre des éléments, comprenant :
une étape de formation d'une couche adhésive en appliquant sur une surface de premier élément une composition liquide contenant une résine thermodurcissable n'ayant pas de groupe fonctionnel polymérisable par rayonnement, un durcisseur, un premier composé polymérisable ayant un groupe fonctionnel polymérisable par rayonnement et un groupe fonctionnel durcissable à la chaleur, un deuxième composé polymérisable ayant un groupe fonctionnel polymérisable par rayonnement et n'ayant pas de groupe fonctionnel durcissable à la chaleur, et une capsule à dilatation thermique ;
une étape de semi-solidification de la couche adhésive en irradiant un rayonnement sur la couche adhésive de telle sorte qu'une couche adhésive semi-solidifiée est formée laquelle, pour la majeure partie, n'a aucune adhésivité sur sa surface et aucune fluidité ou déformation, même lorsqu'elle est touchée de façon externe ;
une étape de mise en place d'un deuxième élément au-dessus de la couche adhésive semi-solidifiée de façon à s'opposer à la surface de premier élément ; et
une étape de jointure du premier élément et du deuxième élément en chauffant pour dilater et solidifier la couche adhésive semi-solidifiée
dans lequel un module de conservation en cisaillement de la couche adhésive semi-solidifiée n'est pas inférieur à 100 kPa à 25 °C et 1 Hz, comme décrit dans la description.

2. Procédé selon la revendication 1, dans lequel la résine thermodurcissable est une résine époxy ou une résine ester de cyanate.

3. Adhésif utilisé pour remplir un espace obtenu ou pouvant être obtenu par durcissement par rayonnement d'une composition comprenant :
une composition liquide contenant une résine thermodurcissable n'ayant pas de groupe fonctionnel polymérisable par rayonnement, un durcisseur, un premier composé polymérisable ayant un groupe fonctionnel polymérisable par rayonnement et un groupe fonctionnel durcissable à la chaleur,
un deuxième composé polymérisable ayant un groupe fonctionnel polymérisable par rayonnement et n'ayant pas de groupe fonctionnel durcissable à la chaleur, et
une capsule à dilatation thermique
dans lequel l'adhésif est sous la forme d'une couche adhésive semi-solidifiée de telle sorte que, pour la majeure partie, la couche adhésive n'a aucune adhésivité sur sa surface et aucune fluidité ou déformation, même lorsqu'elle est touchée de façon externe.

4. Adhésif selon la revendication 3, dans lequel la résine thermodurcissable est une résine époxy ou une résine ester de cyanate.

5. Élément à dos adhésif comprenant une couche formée à partir d'un adhésif selon la revendication 3 ou 4.

6. Combinaison de l'élément à dos adhésif selon la revendication 5 et d'un deuxième élément, dans lequel l'élément à dos adhésif est un premier élément, et la couche adhésive est entre le premier élément et le deuxième élément, mais ne vient pas en contact avec le deuxième élément.

7. Combinaison selon la revendication 6, dans lequel la couche adhésive est sous la forme d'une couche de jointure durcie à la chaleur qui joint l'un à l'autre le premier élément et le deuxième élément.
